# EUROPEAN PATENT APPLICATION

(11) **EP 2 330 821 A2**
(43) Date of publication of application: **08.06.2011**
(21) Application number: 09811647.8
(22) Date of filing: 30.07.2009
(51) Int. Cl.: H04N 7/173

(54) **METHOD AND SYSTEM FOR PROVIDING BIDIRECTIONAL CONTENTS SERVICE IN CABLE BROADCASTING ENVIRONMENT, AND COMPUTER-READABLE RECORDING MEDIUM**

(30) Priority: 07.09.2008 KR 20080087994
(71) Applicant: ITVMG, Seocho-gu Seoul 137-909 (KR)
(72) Inventor: SEO, Sung Ho, Seoul 137-767 (KR)
(74) Representative: Diehl & Partner GbR
(86) International application number: PCT/KR2009/004249
(87) International publication number: WO 2010/027148

(57) **Abstract**

The present invention relates to a system for providing a bidirectional contents service in a cable broadcasting environment, and a method thereof. More specifically, the invention relates to the system that is able to provide a service by implementing the bidirectional contents service in a cable broadcasting environment, and the method thereof. According to one embodiment of the invention, provided is the system for providing the bidirectional contents service by comprising: a ubiquitous unit that processes bidirectional contents to implement the screen and/or control functions for the bidirectional contents service in a reception terminal, and an encoding unit that converts the bidirectional contents processed by the ubiquitous unit into a certain format proper for digital broadcasting in real time.

## Description

### [Technical Field].

The present invention relates to a method, a system, and a computer-readable recording medium for providing an iterative content service in a cable broadcast environment, and more particularly, to a method, a system, and a computer-readable recording medium for implementing an interactive content service in a cable broadcast environment to provide an iterative content service in a cable broadcast environment.

### [Background Art]

With the advent of the era of integrated broadcasting and communication, multimedia related environments have changed along with development of technologies, change of viewers' demand, diversification of content supply, and the like.

For example, broadcasting schemes have gradually changed from analog broadcasting to digital broadcasting and broadcast services, which was mainly based on televisions, have been diversified to cable broadcasts, satellite broadcasts, so-called IP TV services which provide multimedia data through a high speed communication network, DMB services, and the like.

Under such digital broadcasting environments, it is possible to transmit not only conventional A/V broadcast signals but also various digital broadcast applications and additional data while implementing and providing an interactive (bidirectional) service through cooperation with a network.

Such interactive services take a very important role in settling digital broadcasting and extending digital broadcast services since viewers (i.e., users) can easily use interactive services using a familiar receiving terminal such as a TV and a set-top box (STB).

In digital broadcasting, A/V data and broadcast service signals decoded in a Head End (H/E) system are transmitted by dividing them into packets having a fixed size within a specified bandwidth and the receiving side recombines the packets and processes them into a digital broadcast service. Here, processing of multiple channels and many programs, execution of applications, and the like are performed simultaneously.

Especially, in the case where a service that is not stored in a receiving terminal is provided, there is a need to perform processes for downloading every data of the service through a network and executing the downloaded data. In this case, transmission and execution speed may be reduced. Packets may also be lost during transmission such that it is not possible to execute related applications. There is also a problem in that it is not possible to provide various high resolution services due to low performance of the receiving terminal.

### [Disclosure]

### [Technical Problem]

Current digital broadcast communication services have many challenging problems associated with development of content and use of services.

Since content for providing services has been developed such that content is processed and provided so that the content can be easily used by receiving terminals, many problems have been raised. Examples of such problems include a long content development period, difficulties in achieving compatibility of content due to different technical standards of media, limited content capacity due to low performance of receiving terminals, low content execution (or reproduction) speed, difficult service content matching in receiving terminals, the occurrence of side effects in a receiving terminal when service content is changed, and the occurrence of re-matching issues.

### [Technical Solution]

It is an object of the present invention to provide an interactive content service in a ubiquitous environment which can overcome the above problems.

Particularly, it is an object of the present invention to provide a system and method for providing an interactive content service in a cable broadcast environment based on an interactive broadcast system which can overcome network bandwidth problems such as 1 to many communication through in-band transmission of a cable broadcast.

### [Advantageous Effects]

Broadcast communication services as an embodiment of the present invention may achieve a variety of advantages.

The following advantages are provided to platform providers, regardless of technical standards of media.

First, according to the present invention, since it is possible to achieve easy compatibility between various content items and easy compatibility with an unlimited number of web content items (i.e., it is possible to convert content using only the website's address), it is easy to integrally manage provided content and services. Thus, the present invention is advantageous in terms of Multicast Dissemination Protocol (MDP) services or the like. Accordingly, it is possible to unlimitedly extend content regardless the specification of the receiving terminal. That is, while, according to the conventional technology, content that can be stored in a receiving terminal to provide a service has been limited due to limited storage of the receiving terminal, i.e., due to a limited hardware storage space such as memory and RAM, it is possible to eliminate such limitations to make it easy to secure budget for the receiving terminal according to the present invention.

According to the present invention, the period required for the receiving terminal to perform matching between content items is reduced due to such easy content conversion. That is, although various matching related problems may occur upon service change in a receiving terminal in the case where conventional services are provided, it is possible to prevent the occurrence of side effects and abnormal situations due to content conversion according to the present invention. Accordingly, service launching time is reduced and service change is made easy.

The following advantages are provided to users and viewers.

First, it is possible to improve performance of receiving terminals, provide personal broadcasting means, and provide general-purpose content of multiple media since, according to the present invention, it is possible to achieve One Source Multi-Use (OSMU) between media, easy compatibility with web content, reduction in service development period, receiving terminal matching, and the like.

Broadcast communication providers also have the following advantages. For example, it is possible to immediately (or directly) apply their content to be provided, regardless of characteristics of media or platform, and the method for receiving content from a Content Provider (CP) or a Data Provider (DP) is simplified, and therefore it is possible to easily configure or change policies and strategies associated with broadcast services.

In addition, content providers such as a CP and a DP have advantages in that the method for uploading content for broadcast services is simplified and additional costs due to service matching and change are reduced since it is possible to immediately apply content regardless of the type of content. It is also possible to significantly reduce redundant development costs since it is possible to apply services regardless of platform and media.

From the viewpoint of consumers, there are also advantages in that it is possible to access various content items and it is also possible to provide their own personal broadcasting such that they can become active prosumers who not only consume information but also create new information.

A digital multimedia service is mainly provided in a format (for example, a Walled garden format) that suits a closed service network of a service provider. The access and use frames of Walled garden services are determined according to the strategies and intentions of services of the platform provider and are developed by applying policies for paid or charged services when services are produced. However, a new method is needed in order to apply paid or charged services for open Internet content that has been recently provided. Conventional Walled garden based services have problems of insufficient content and unreasonable charging from the viewpoint of users although it is easy to carry forward charging and service policies from the viewpoint of service providers. If the system of the present invention is used, it is possible to efficiently configure not only Walled garden based services but also open content based services that are contrary to such Walled garden based services and therefore it is possible to overcome the above problems and to expend digital broadcast markets in the ubiquitous era.

Specifically, such a ubiquitous system is applied to a cable environment, it is possible to provide services associated with website, various electronic documents, game, PC utilities, audio, and video in real time regardless of network bandwidth.

That is, while conventional digital cable broadcast environments greatly limits active interactive (or bidirectional) broadcasts due to limited network bandwidth and content supply and ubiquitous systems require additional processes such as additional network bandwidth allocation for audio and video transmission, it is possible to provide services regardless of bandwidth according to the present invention.

### [Description of Drawings]

The accompanying drawings, which are included to provide a further understanding of the invention, illustrate embodiments of the invention and together with the description serve to explain the principle of the invention.

In the drawings:

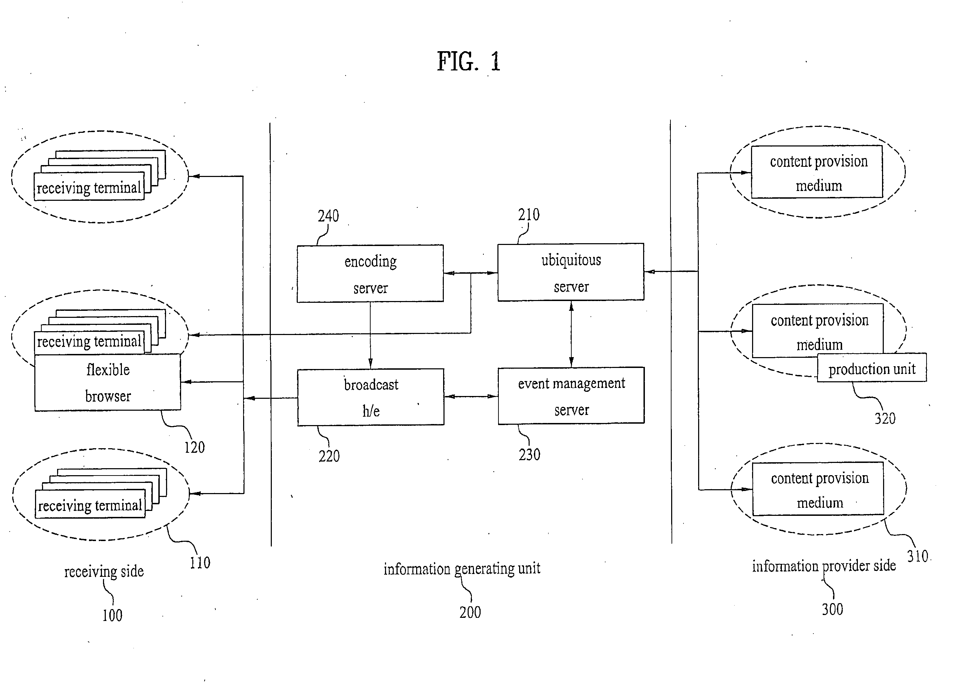

FIG. 1 is a block diagram of a system according to an embodiment of the present invention.
FIG. 2 is a detailed block diagram of a system according to an embodiment of the present invention.
FIG. 3 is a block diagram illustrating a detailed configuration of a receiving terminal.
FIG. 4 is a flow chart illustrating a method for allocating an interactive service channel.
FIG. 5 is a flow chart illustrating the steps of requesting and receiving an interactive service.

### [Best Mode]

The following are exemplary configurations of the present invention for achieving the objects described above.

In accordance with one aspect of the present invention, there is provided a system for providing an interactive content service, the system comprising a ubiquitous unit for processing interactive content such that screen and/or control functions of an interactive content service can be implemented at a receiving terminal, and an encoding unit for converting interactive content processed by the ubiquitous unit into a specific format suitable for a digital broadcast in real time.

In accordance with another aspect of the present invention, there is provided a method for providing an interactive content service, the method including allocating an in-band channel for an interactive content service, transmitting added or changed channel lineup information through allocation of the in-band channel to a receiving terminal, and storing the channel lineup information in the receiving terminal.

In accordance with another aspect of the present invention, there is provided a method for providing an interactive content service, the method including determining, when content is requested by a receiving terminal, whether or not the requested content is available, tuning to an interactive channel upon determining that the requested content is available, and encoding and processing the content so that the content can be transmitted to the receiving terminal, and transmitting the processed content to the receiving terminal.

In accordance with another aspect of the present invention, there are also provided other methods and systems for implementing the present invention and a computer readable recording medium containing a computer program for performing the method.

### [Mode for Invention]

The following detailed description of the present invention will be given with reference to the accompanying drawings which show specific possible embodiments of the present invention as examples. The embodiments will be described in sufficiently detail enough to enable those skilled in the art to practice the present invention. It should be understood that various embodiments of the present invention are not necessarily exclusive to each other although the various embodiments are different. For example, specific forms, structures, and features of one embodiment described herein may be implemented as another embodiment without departing from the scope and spirit of the present invention. It should also be understood that the positions or arrangements of individual components of each embodiment described below can be changed without departing from the scope and spirit of the present invention. Accordingly, the following detailed description is not intended to limit the scope of the present invention and the scope of the present invention is limited only by the appended claims and all equivalents thereof. Like reference numerals in the drawings refer to the same or like functions in various aspects.

Hereinafter, preferred embodiments of the present invention will be described in detail with reference to the accompanying drawings so that those skilled in the art can easily practice the present invention.

It will be understood that, although the terms "first," "second," etc. may be used herein to describe various elements, components, regions, layers and/or sections, these elements, components, regions, layers and/or sections should not be limited by these terms.

Embodiments of the present invention will now be described in detail with reference to the accompanying drawings.

A broadcast communication system and a receiving terminal described as an example in the embodiments of the present invention are applied to any device associated with a broadcast communication system such as a TV, a personal computer, a PCTV, a set-top box, a PVR, or a DVR without being limited to a specific system and hardware device.

In addition, the present invention is applied to a digital TV service, a VOD service, an AOD service, an Internet service, a digital home service, or any other digital content service that is provided to terminals using digital storage media of a PVR or DVR without being limited to a specific medium.

Generally, a system for providing a digital cable broadcast service mainly includes a head end, which receives and processes data uploaded from subscribers while transmitting broadcast-related digital signals, and a receiving terminal (set-top box) which receives a digital signal transmitted from the head end and converts the received signal into an analog signal to reconstruct original audio and video signals.

The head end is a content production system or a system that has technical equipment for receiving program content through a system network from a DP and a PP and producing and retransmitting content. The receiving terminal is a household communication terminal that is needed to use general audio/video services and various multimedia communication services such as charged services including interactive broadcasts and broadcasts on demand.

In digital cable broadcasting, a digital broadcast receiver (set-top box) is a device that receives and processes digital broadcast and management information transmitted from a head end installed in a regional cable TV company for providing cable TV or cable modem services to subscribers and displays the processed information on a display and receives and processes user information through an input device.

The set-top box receives broadcast and management information such as authority information of a Central Authentication System (CAS), which restricts broadcast reception, a service information server that transmits broadcast channel information for content, and program content information of the head end system.

In cable digital broadcasting environments based on cable networks, many cable digital broadcast receivers include a cable modem which is a device for converting an analog signal into a digital signal to enable use of high speed Internet services through the cable network. The name "modem" is given since the cable network is an analog network such a telephone network. The bandwidth of the cable network is much wider than that of the telephone network since the cable network uses optical fiber networks while the telephone network uses copper wires. However, also the cable network requires modulation and demodulation technologies for converting digital signals into analog signals and again converting such analog signals back into digital signals.

A Hybrid Fiber Coaxial (HFC) network is constructed using a mixture of optical fiber cables and coaxial cables. In the HFC, one cable broadcast region of a cable TV network is divided into a number of unit cells and optical fiber cables are used between the broadcast station and unit cells and coaxial cables are used between unit cells and subscribers.

That is, the HFC network is a broadband communication network that uses optical fiber cables between broadcast stations and Optical Network Units (ONUs) and coaxial cables between ONUs and subscribers so that it is possible to transmit a lot of TV content, interactive communication data, and other control signals. Theoretically, the HFC can support a broad transmission bandwidth that enables connections at transfer rates of 9600bps to 30Mbps per channel of the 6MHz bandwidth.

The HFC transmission network includes interactive (bidirectional) channels that enable transmission of downlink signals from ONUs to subscribers and transmission of uplink signals from subscribers to ONUs. Generally, optical fiber cables enable transmission of web data through channels of bandwidths remaining after transmission of broadcast signals or Out Of Band (OOB) channels (6MHz per channel).

The following is an embodiment of a digital cable broadcast service system that implements interactive content services to enable provision of services in such cable broadcast environments.

The entire system of this embodiment is mainly divided into a receiving side 100, an information generation side 200, and an information provider side 300. In order to achieve the same objects, a Subscript Management System (SMS) for managing authority of paid or charged content and subscriber information management and a Conditional Access System (CAS), which are not shown, may be added to the information generation side 200 which is used in a general broadcast environment system.

First, a ubiquitous server 210 in the information generation side 200 enables provision of an interactive (or bidirectional) service using a new method suggested in the present invention in combination with the digital broadcast system. A distribution processing unit and a content management unit, which are not shown, may be added to the ubiquitous server 210.

The distribution processing unit may perform load distribution (channel management, session management, and service resource management) functions. One example is channel distribution in a broadcast service embodiment. The content management unit may manage services uploaded from a provider medium and processes additional information.

A broadcast H/E 220 in the information generation side 200 is a general system that encodes, compresses, multiplexes, and transmits broadcast streams such as video, audio, and data application streams.

A conventional broadcast system may be used as the broadcast H/E 220. The broadcast H/E 220 is connected to an event management server 230 and functions to multiplex streams of interactive content received from the ubiquitous server 210 and a plurality of digital A/V signals and provide the multiplexed signal to the receiving side 100.

Examples of the broadcast H/E 220 may include a head end system such as a PPV system, a VOD system, or a head end system that is mainly based on an audio channel such as audio dedicated channel. The broadcast H/E 220 includes an iTV H/E for broadcasting data to a receiving terminal 110 included in the receiving side 100.

The event management server 230 is a system that manages programming information of digital broadcasts, channel lineup, and the like. The event management server 230 manages information according to the PSIP/SI and data broadcast standards. The event management server 230 is connected to the broadcast H/E 220 and the ubiquitous server 210 and may transfer programming information to the receiving terminal 110 to configure an EPG application screen.

A conventional broadcast system that manages channels, events, and the like may be used as the event management server 230. The event management server 230 may perform functions to manage scheduling of events or in-band channels that carry content through the ubiquitous server 210. As circumstances permit, the system configuration may be modified such that the ubiquitous server 210 manages event scheduling.

The encoding server 240 is a device that receives content from the ubiquitous server 210 and encodes the received content into a broadcast stream in real time. When performing encoding, the encoding server 240 may perform authority setting in combination with the CAS. Through such authority setting, the encoding server 240 may scramble content such that the receiving side 100 abnormally outputs the content when receiving side 100 has no authority. Hereinafter, the encoding server 240 can be refered to an encoding processor and the encoding server can be included in the ubiquitous server 210.

The encoding server 240 may be constructed as a multiplexing and parallel system to achieve provision of interactive services of multi-channel and multiple content. Depending on the system configuration, the encoding server 240 may directly transmit the content to the receiving side 100 through a network.

A content provision medium 310 included in the information provider side 300 may be one of content systems that are generally used in ubiquitous era such as the Internet, PC, or home network system and a content provision medium such as a DP, a CP, or a broadcast production system.

When a viewer has requested content in a digital cable interactive system, the ubiquitous server 210 acquires information through the content provision medium 310 of the information provider side 300. The content provision medium 310 may be a Walled garden system that is included in a digital cable broadcast system and may also be simply an open content type external system such as an Internet system connected to a network.

In the Walled garden system, the content provision medium 310 may create and independently handle data requested by the ubiquitous server 210. In addition, interactive service content may also be produced, verified, and distributed through a production unit 320 included in the content provision medium 310. The production unit 320 may be included in every content provision medium 310.

Such a production unit 320 is provided in a hardware or software form in the content provision medium 310 to enable easy data conversion and content uploading. Profits of uploaded and registered content services may be shared with the content provision medium 310 under management of all service providers.

When the content is of an open content type, request and data transfer processes are performed on the content as simple request and response processes are performed when a general Internet service is used.

The receiving side 100 includes a plurality of receiving terminal 110, each of which includes a remote broadcast client regardless of the type of media such as terrestrial broadcast, satellite broadcast, cable broadcast, DMB, WIBRO, WWW, or PDA. Each receiving terminal 110 is a device that receives content transmitted by the ubiquitous server 210 and provides service screens and functions.

The receiving terminal 110 is provided with a flexible browser 120 that plays or executes content received from the 210. The flexible browser 120 may communicate with the ubiquitous server 210 to perform an appropriate function, regardless of the type of medium of the receiving terminal 110 or the receiving terminal 110 of each medium. The flexible browser 120 may be included in every receiving terminal 110.

The flexible browser 120 is a type of unbound application provided in the receiving terminal 110. The flexible browser 120 is used for menu and management purposes and provides a minimal interface for interactive services.

The flexible browser 120 serves to transfer a content request signal to the ubiquitous server 210 through a return path and to tune to an in-band channel for an interactive service. Interactive service content that the encoding server 240 generates in the form of a real-time stream is provided to the receiving terminal 110 through an in-band channel.

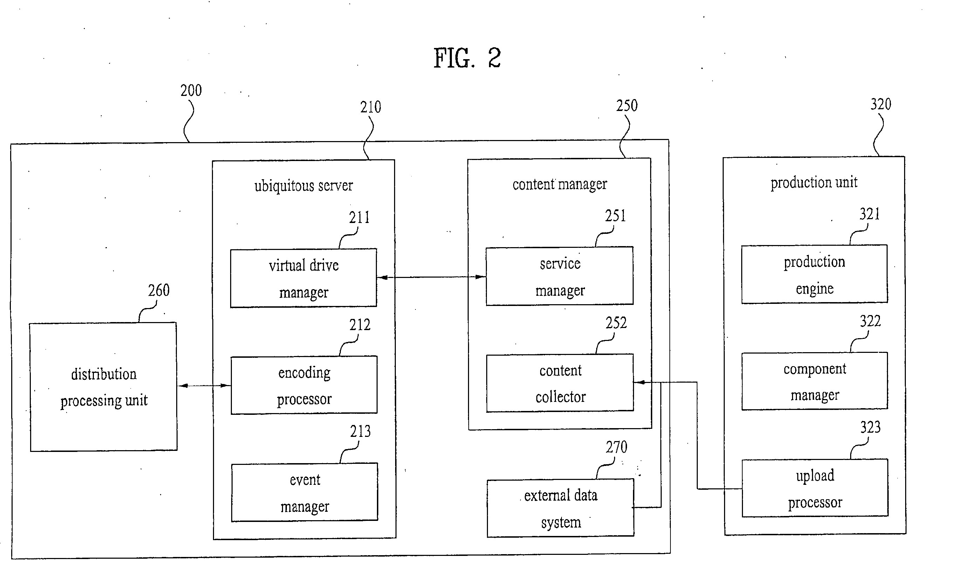

FIG. 2 shows main functions and a detailed configuration of the information generation side 200.

A virtual drive manager 211 is provided in the ubiquitous server 210 to analyze the type and value of a signal of each request input from the receiving terminal 110 and to manage data generated according to each request.

An MSHTML component, a web browser component, or the like may be used as an example of the virtual drive manager 211 to process each user input that has been requested to the ubiquitous server 210.

Here, each user input is generated through an input interface of the receiving terminal 110. The virtual drive manager 211 analyzes an input signal received from the receiving terminal 110 and generates response information to the received input signal.

Thereafter, the virtual drive manager 211 generates, as response information, video information or audio information for configuring a screen based on the input signal and provides the generated video or audio information to an encoding processor 212.

The encoding processor 212 converts source and meta data to be transmitted into a protocol format so that the source and meta data can be processed by the flexible browser 120. Thus, the encoding processor 212 encodes source and meta data according to an attribute of the receiving terminal 110 for each media.

A service provided to the user may include content information such as audio, video, or data and mapping information for scheduling the content information. The event manager 213 may contain indication information such as channel information, program schedule information such as programming information, content management information, and screen configuration information of content to be transmitted. The event manager 213 may also perform a function in combination with another system. For example, the event manager 213 may provide a function associated with programming information of a broadcast system in combination with the event management server 230.

The information generation side 200 may further include a content manager 250, a distributed processor 260, and an external data system 270.

The following is a description of a detailed configuration of the content manager 250. First, a service manager 251 in the content manager 250 manages the type (or form) of a service source to be transmitted to the ubiquitous server 210. The service manager 251 also serves to drive content in a configuration for an internal service of a provider such as a Walled garden service.

The content collector 252 manages/analyzes user information of each service collected through the ubiquitous server 210. The content collector 252 may also receive service content uploaded by a CP and data provider. Here, whether the configuration of content is normal may be verified upon uploading of the content.

The content collector 252 may also acquire and use information from the external data system 270. One example of the external data system 270 is the Subscript Management System (SMS) described above. The SMS is a system that manages information of subscribers who use services of the provider.

The content collector 252 may provide marketing and a one-to-one target service such as a targeted advertisement using service usage information and subscriber information of the SMS. In addition, it is possible to configure a system which enables sharing of the profits of service fees or the like with an information provider such as a CP or a DP using service usage information or the like (MDP service).

A detailed configuration of the production unit 320 is described in Korean Patent Application No. 10-2004-0016707 filed by the present Applicant.

The production engine 321 in the production unit 320 may use a template. It is also possible to easily generate service content through a simple manipulation using a component provided by the component manager 322.

The production engine 321 can provide a variety of management functions such as image, text, audio control, and video editing and can also provide application functions. Applications generated through the production engine 321 may be applications that use various languages such as HTML, XML, and Java.

The production engine 321 may generate application sources and compiled binary codes.

Functional modules that are frequently used at the component manager 322 may be packetized and provided for a developer's convenience. The component manager 322 may use new component and management functions through addition of a system such as a live update server using change information such as new version information associated with components and templates.

Specifically, the component manager 322 may process modules such as ActiveX and security modules so that the modules are compatible with the flexible browser 120 so as to reconstruct various components of open content.

Content produced by the production engine 321 may be uploaded to the content collector 252 of the information generation side 200 through the upload processor 323. Here, it is possible to use a variety of protocols such as FTP and HTTP.

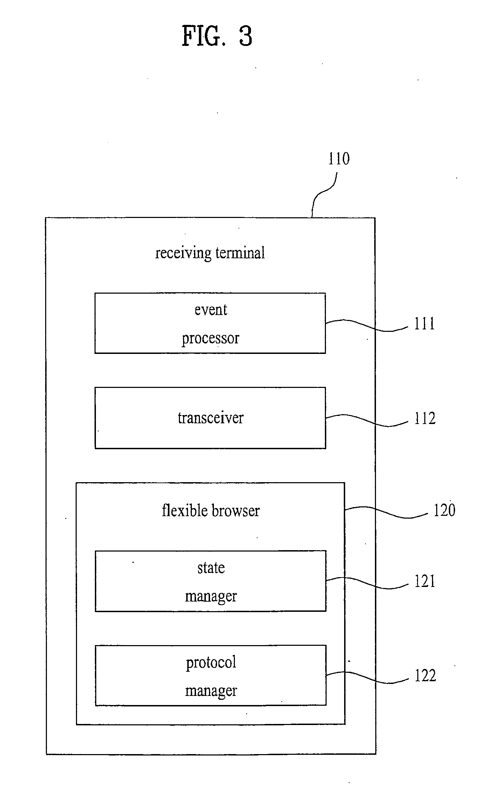

A detailed configuration of the receiving terminal 110 will now be described with reference to FIG. 3. As shown in FIG. 3, the receiving terminal 110 may include an event processor 111 that receives an input event from an interface device that receives remote controller and usage signals from a viewer (i.e., user). The event processor 111 is a middleware and hardware based processing part that is typically provided in the receiving terminal 110.

The flexible browser 120 may receive and use a signal input to the event processor 111.

A transceiver 112 that may network with another system may be provided in the receiving terminal 110. The flexible browser 120 may communicate with the ubiquitous server 210 and use information of another system using the functions of the transceiver 112.

The flexible browser 120 may include a state manager 121 which manages and controls execution, termination, and the like of a received content service. The state manager 121 is responsible for, for example, processing change of screens of content and programming information. The state manager 121 may also manage a list of content items and a path to access each content item depending on service configurations.

In addition, the state manager 121 may perform a function to manage screens. For example, the state manager 121 performs Picture In Picture (PIP) processing on a video region in a received A/V broadcast and restores the signal into an original state. The state manager 121 also performs overall processing of screens. For example, the state manager 121 performs processing of screens when various applications are activated upon reception of a broadcast.

In this manner, the flexible browser 120 provides corresponding attribute information to the ubiquitous server 210 based on medium attribute information according to the medium and receives suitable content information and expresses the content.

The protocol manager 122 is an element that transfers a request to the ubiquitous server 210 or converts additional information generated by the receiving terminal 110 into a protocol format and transfers the resulting data to the ubiquitous server 210. The protocol manager 122 also analyzes data associated with a protocol received from a remote broadcast server and displays the resulting data on a screen of the receiving terminal 110 or prompts the user to use the data.

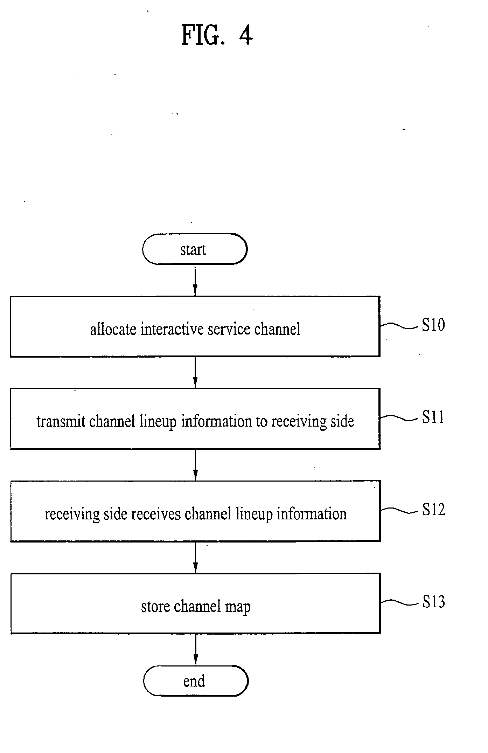

A method for allocating an interactive service channel according to an embodiment of the present invention will now be described in detail with reference to FIG. 4.

As described above, interactive service content is provided through a dedicated in-band channel. Accordingly, each interactive service may be allowed to be easily managed according to a management channel lineup state and availability or the degree of use of the interactive service.

First, an in-band channel is allocated to an interactive service (S10). Setting information for such allocation may include a channel ID, a bandwidth, and the like. The event management server 230 may manage the interactive service channel by adding the interactive service channel to channel lineup information that has been previously used. On the other hand, the ubiquitous server 210 may also independently manage the interactive service channel.

Thereafter, the event management server 230 transmits the added or changed channel lineup information to the receiving side 100 (S11).

The receiving terminal 110 of the receiving side 100 receives the added or changed channel lineup information (S12).

The receiving terminal 110 stores the channel lineup information as a channel map in a memory region (S13). Here, the general channel lineup and the interactive service channel may be stored separately.

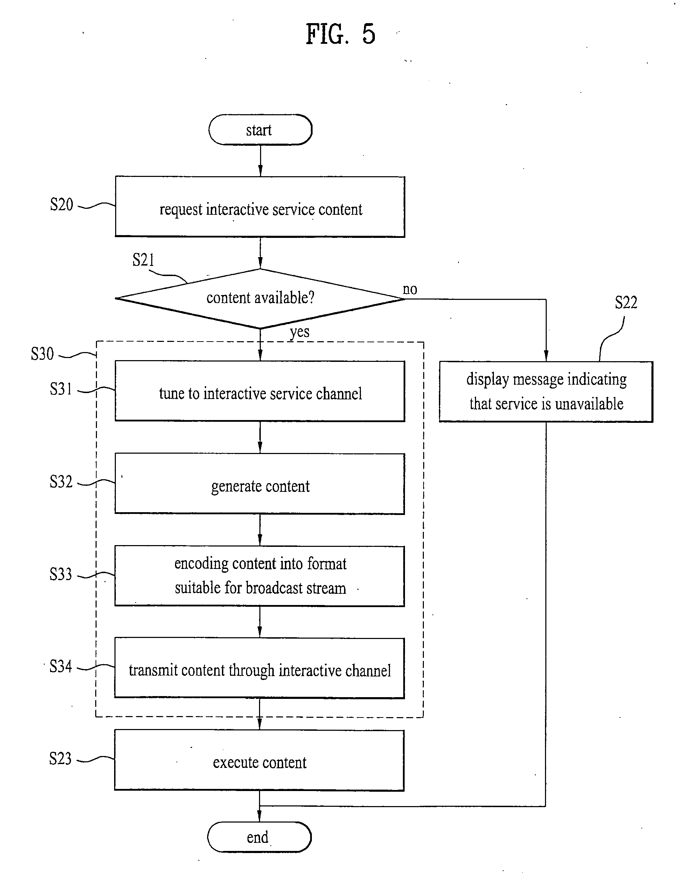

A process for issuing an interactive service request and receiving an interactive service is described below with reference to FIG. 5.

To display an interactive service, the ubiquitous server 210 needs to tune to a set in-band interactive channel and to receive and process corresponding content. The interactive content is received and displayed in an MPEG2 stream format suitable for a digital broadcast service. This process is generally performed by hardware and middleware modules in the receiving terminal 110. On the other hand, processes for unique lifecycle and navigation suitable for interactive services may be performed by the flexible browser 120.

To perform such processes, first, the flexible browser 120 requests content of an interactive service from the ubiquitous server 210 through a return path (S20).

Then, the ubiquitous server 210 checks whether or not the requested content is available (S21). Here, the ubiquitous server 210 needs to check two factors, validity and authority to check whether or not the requested content is available. Validity is checked by determining whether or not the content is executable by the ubiquitous server 210 and authority is checked by checking authority of the content receiving terminal 110 and whether or not the content is executable according to the authority of the content receiving terminal 110.

Accordingly, the ubiquitous server 210 checks whether or not the requested content is executable. When the requested content is executable, the ubiquitous server 210 provides a signal, indicating that the service is available, to the flexible browser 120 of the receiving terminal 110 and encodes and processes the content so that the receiving terminal 110 receives the content by tuning to a tuned interactive channel (S30).

On the other hand, there is a need to perform a process for checking authority of content. The receiving terminal 110 cannot use the requested content when the authority level of the requested content is higher than the authority level of the receiving terminal 110. In this case, a message indicating that the service cannot be used is displayed (S22).

The following is a detailed procedure in which the receiving terminal 110 tunes to an interactive channel and content is then encoded and transmitted so as to be transmitted to the receiving terminal 110.

First, the flexible browser 120 tunes to an interactive service channel of a channel map (S31). When a plurality of interactive service channels is present, the flexible browser 120 tunes to an interactive service channel mapped to selected content. Here, a representative interactive service channel may be set to improve channel tuning speed.

Here, a predetermined standby time may occur before the receiving terminal 110 receives interactive content. Thus, the flexible browser 120 may configure an intermediate processing screen such as a data download screen.

Upon receiving a content request from the flexible browser 120, the ubiquitous server 210 may generate and provide requested content to the encoding server 240 to allow the encoding server 240 to convert the content into a real-time broadcast stream (S32).

Here, in order to improve service performance, the ubiquitous server 210 may use a cache function that stores execution files of frequently used content.

Then, the encoding server 240 encodes and converts interactive service content received from the ubiquitous server 210 into a broadcast stream suitable for a real-time digital broadcast (S33). Here, typically, interactive service content may be encoded into an MPEG-2 transport stream.

Here, a method in which only changed part of content is again encoded may be used to improve encoding performance.

The interactive service broadcast stream encoded in this manner is provided to the broadcast H/E 220 to be transmitted through a set in-band interactive channel (S34).

The receiving terminal 110 executes received content to display the content on a screen (S23).

The process S30 in which the receiving terminal 110 tunes to an interactive channel and content is then encoded and processed so that the content can be transmitted to the receiving terminal 110 may be selectively performed depending on the result of determination at step S21 as to whether or not the requested content is available. That is, depending on the result of determination at step S21, the procedure of the system of the present invention may selectively branch to one of two processes, one being the content encoding process S30, the other being a standby process of the flexible browser 120. Here, the process S30 is performed upon determining at step S21 that the requested content is available.

The steps of the procedure of FIG. 5 may be performed in parallel (i.e., simultaneously) rather than sequentially. That is, although the steps of the procedure are illustrated as being sequentially performed in the flow chart of FIG. 5, the steps may be simultaneously performed until content is received by the receiving terminal 110.

The embodiments according to the present invention described above may be implemented in the form of program instructions that may be executed through various computer components to be recorded on a computer readable medium. The computer readable medium may include program instructions, data files, data structures, and the like individually or in combination. The program instructions recorded on the medium may be specifically designed for the present invention or may be well known to one of ordinary skill in the art of software. Examples of the computer readable recording medium include a magnetic medium such as a hard disk, a floppy disk, or a magnetic tape, an optical medium such as CD-ROM or DVD, a magneto-optical medium such as a floptical disk, and a hardware device such as ROM, RAM, or a flash memory that is specially designed to store and execute program instructions. Examples of the program instructions include not only machine code generated by a compiler or the like but also high-level language codes that may be executed by a computer using an interpreter or the like. The hardware device described above may be constructed so as to operate as one or more software modules for performing the operations of the embodiments of the present invention, and vice versa.

Although the present invention has been described with reference to the specific embodiments and drawings together with specific details such as detailed components, the above description is provided only for better understanding of the present invention and it will be apparent to those skilled in the art that various modifications and variations may be made from the above description.

Accordingly, the scope of the invention should be determined by the appended claims and their legal equivalents, not by the above description, and all changes coming within the meaning and equivalency range of the appended claims are intended to be embraced therein.

## Claims

1. A system for providing an interactive content service, the system comprising:
a ubiquitous unit for processing interactive content such that screen and/or control functions of an interactive content service can be implemented at a receiving terminal; and
an encoding unit for converting interactive content processed by the ubiquitous unit into a specific format suitable for a digital broadcast in real time.

2. The system according to claim 1, wherein the encoding unit converts the interactive content into an MPEG-2 Transport Stream (TS).

3. The system according to claim 1, further comprising a broadcast head end unit for transmitting the interactive content converted by the encoding unit to the receiving terminal.

4. The system according to claim 3, wherein the ubiquitous unit further includes an event information manager for mapping at least one of broadcast programming information and channel lineup information to a broadcast source, compressing and multiplexing the information, and providing the information to the broadcast head end.

5. The system according to claim 1, wherein the interactive content is provided through a preset in-band channel.

6. A method for providing an interactive content service, the method comprising:
allocating an in-band channel for an interactive content service;
transmitting added or changed channel lineup information through allocation of the in-band channel to a receiving terminal; and
storing the channel lineup information in the receiving terminal.

7. A method for providing an interactive content service using the system of claim 1, the method comprising:
determining, when content is requested by a receiving terminal, whether or not the requested content is available;
tuning to an interactive channel upon determining that the requested content is available, and encoding and processing the content so that the content can be transmitted to the receiving terminal; and
transmitting the processed content to the receiving terminal.

8. The method according to claim 7, wherein the processing step includes:
providing the content requested by the receiving terminal to an encoding unit;
encoding the content into a broadcast stream suitable for a real-time digital broadcast; and
providing the encoded broadcast stream to a broadcast head end to transmit the encoded broadcast stream through a preset in-band channel.

9. The method according to claim 8, wherein an execution file of frequently requested content is cached at the step of providing the content.

10. A computer readable recording medium containing a computer program for performing the method according to any one of claims 6 to 9.
